# DEMANDE DE BREVET EUROPEEN

(11) **EP 1 902 934 A1**
(43) Date de publication de la demande: **26.03.2008**
(21) Numéro de dépôt: 07301369.0
(22) Date de dépôt: 14.09.2007
(51) Int. Cl.: B62H 3/02, B62H 5/00

(54) **Système de stockage automatique de cycles, cycle pour un tel système et poste de verrouillage pour un tel système**

(30) Priorité: 19.09.2006 FR 0608190
(71) Demandeur: JCDecaux SA, 92200 Neuilly-Sur-Seine (FR)
(72) Inventeur: Gagosz, Jean-Claude, 28140 Bu (FR); Ardouin, Thierry, 78340 Les Clayes sous Bois (FR)
(74) Mandataire: Cabinet Plasseraud

(57) **Abrégé**

Système de stockage automatique de cycles comprenant une pluralité de cycles verrouillables chacun sur un poste de verrouillage (9) par l'intermédiaire de premier (11) et deuxième (10) dispositifs de fixation liés l'un au cycle et l'autre au poste de verrouillage (9). Le deuxième dispositif de fixation (10) comprend une tête d'ancrage (14) sensiblement verticale. Le premier dispositif de fixation (11) comprend :
. une fourche qui présente un espace de réception (24) ouvert verticalement adapté pour recevoir la tête d'ancrage (14),
. un organe de verrouillage (25) déplaçable par rapport à la fourche.
Un jeu vertical est ménagé entre les premier (11) et deuxième (10) dispositifs de fixation.

## Description

L'invention se rapporte à un système de stockage automatique de cycles, un cycle pour un tel système et un poste de verrouillage pour un tel système.

En particulier, l'invention se rapporte à un système de stockage automatique de cycles comprenant une pluralité de cycles et une pluralité de postes de verrouillage fixes, chaque cycle étant verrouillable sur un poste de verrouillage selon une direction longitudinale par l'intermédiaire de premier et deuxième dispositifs de fixation liés l'un au cycle et l'autre au poste de verrouillage.

Un tel système de stockage de cycle peut être utilisé par exemple pour mettre des cycles à disposition d'utilisateurs, moyennant identification de l'utilisateur du cycle et éventuellement paiement d'une location auprès d'une borne interactive.

Le document FR-A-2 837 460 décrit un système de stockage de cycles dans lequel l'un des dispositifs de fixation comprend un organe de verrouillage qui se verrouille par engagement dans une gâche de l'autre dispositif de fixation.

Dans ce système de stockage, l'organe de verrouillage et la gâche s'étendent généralement dans la même direction que la direction d'engagement.

Or, une telle réalisation pose des problèmes en termes de mise en place et de verrouillage du cycle sur le poste de verrouillage.

En effet, du fait des portées de contact allongées entre l'organe de verrouillage et la gâche, un décalage relatif vertical ou angulaire, lié par exemple aux irrégularités du sol, à la mise en place des postes de verrouillage sur le sol, au dégonflage des pneumatiques du cycle ou à une orientation inappropriée du cycle par rapport au poste de verrouillage, ne permet pas d'engager la partie extrême de l'organe de verrouillage dans la gâche. L'utilisateur doit alors déplacer le cycle pour trouver un positionnement et une orientation adaptés, ce qui complexifie la mise en place du cycle sur le poste de verrouillage.

De plus, après avoir engagé partiellement l'organe de verrouillage dans la gâche, il peut subsister un décalage, notamment angulaire, ne permettant pas un engagement suffisant pour obtenir le verrouillage de l'organe de verrouillage dans la gâche. Il existe alors un risque que l'utilisateur laisse le cycle en appui sur le poste de verrouillage sans le verrouiller.

L'invention vise à résoudre ces problèmes.

A cet effet, l'invention propose un système de stockage automatique de cycles du type précité dans lequel:
- le deuxième dispositif de fixation comprend une tête d'ancrage sensiblement verticale,
- le premier dispositif de fixation comprend:
   - une fourche qui présente une base transversale et deux branches latérales, écartées l'une de l'autre, s'étendant depuis la base sensiblement dans un même plan horizontal, selon la direction longitudinale, de façon à former un espace de réception ouvert verticalement adapté pour recevoir la tête d'ancrage,
   - un organe de verrouillage déplaçable par rapport à la fourche entre une position escamotée dans laquelle ledit organe de verrouillage n'interfère pas avec la tête d'ancrage et une position de verrouillage dans laquelle ledit organe de verrouillage s'étend au moins partiellement dans l'espace de réception de façon à pouvoir retenir la tête d'ancrage entre les branches et la base,
- un jeu vertical est ménagé entre les premier et deuxième dispositifs de fixation.

Ainsi, la tête d'ancrage s'étend selon une direction généralement perpendiculaire à la direction d'engagement dans l'espace de réception pour pouvoir limiter l'étendue des portées de contact. Un tel système permet d'obtenir le verrouillage des dispositifs de fixation en autorisant un décalage vertical et angulaire, ce qui facilite la mise en place et le verrouillage du cycle sur un poste de verrouillage.

Dans des modes de réalisation particuliers, le système de stockage automatique de cycle peut présenter, de manière éventuellement complémentaire, les dispositions suivantes:
- un jeu transversal est ménagé entre les premier et deuxième dispositifs de fixation selon une direction horizontale perpendiculaire à la direction longitudinale,
- un jeu longitudinal est ménagé entre les premier et deuxième dispositifs de fixation selon ladite direction longitudinale,
- les premier et deuxième dispositifs de fixation sont adaptés pour permettre un engagement entre la tête d'ancrage et l'espace de réception avec un jeu vertical d'au moins ± 2 cm,
- la tête d'ancrage forme une tige rectiligne généralement cylindrique,
- le deuxième dispositif de fixation comprend un corps creux qui s'étend sensiblement verticalement, ledit corps comprenant des premier et deuxième bords transversaux décalés l'un part rapport à l'autre selon la direction longitudinale, la tête d'ancrage étant associée rigidement au premier bord, le corps présentant, entre la tête d'ancrage et le deuxième bord, une zone dont la dimension transversale, mesurée perpendiculairement à la direction longitudinale, est inférieure à celles au voisinage de la tête d'ancrage et du deuxième bord de façon à former un renfoncement latéral d'ancrage qui s'étend verticalement entre la tête d'ancrage et le deuxième bord,
- l'organe de verrouillage est monté pivotant sur la fourche autour d'un axe de rotation sensiblement vertical,
- l'organe de verrouillage comprend un plateau mince et un arbre central s'étendant coaxialement à l'axe de rotation de part et d'autre du plateau, lequel plateau est pourvu d'un évidement ménagé à sa périphérie et adapté pour s'engager sur la tête d'ancrage,
- l'évidement comprend un bord d'arrêt et un bord de butée, le bord d'arrêt se trouvant en dehors de l'espace de réception en position escamotée du plateau et s'étendant dans l'espace de réception, en regard de la tête d'ancrage, à l'opposé de la base en position de verrouillage du plateau, le bord de butée étant adapté pour entrer en contact avec la tête d'ancrage de façon à faire passer le plateau de la position escamotée à la position de verrouillage,
- le premier dispositif de fixation comprend un système de contrôle du déplacement de l'organe de verrouillage, ledit système de contrôle étant déplaçable entre une première position dans laquelle il maintient l'organe de verrouillage dans la position de verrouillage, et une deuxième position dans laquelle il maintient l'organe de verrouillage dans la position escamotée,
- le système de contrôle comprend des première et deuxième bielles articulées l'une à l'autre en rotation autour d'un axe central d'articulation, les extrémités libres de la première et de la deuxième bielles étant articulées respectivement à l'organe de verrouillage et à la fourche autour d'axes latéraux d'articulation de telle sorte que, dans la première position, les bielles sont alignées et, dans la deuxième position, les bielles forment entre elles un coude au niveau de l'axe central d'articulation,
- les axes d'articulation sont verticaux,
- le système de contrôle comprend un organe élastique adapté pour maintenir les bielles alignées dans la première position et pour solliciter élastiquement les bielles vers la deuxième position lorsqu'elles sont désalignées,
- le système de contrôle comprend en outre un organe de maintien associé à l'une des bielles, ledit organe de maintien étant lié à une surface de maintien de la fourche lorsque les bielles sont alignées et étant écarté de la surface de maintien lorsque les bielles sont désalignées,
- l'organe de maintien est un aimant permanent, la surface de maintien de la fourche étant magnétique,
- le système de contrôle comprend en outre un organe d'éjection de l'organe de maintien adapté pour écarter l'organe de maintien de la surface de maintien,
- le premier dispositif de fixation comprend en outre un boîtier fermé délimitant un logement dans lequel l'organe de verrouillage est monté,
- le premier dispositif de fixation comporte un premier circuit électrique commandant l'organe de verrouillage,
- le premier dispositif de fixation comprend au moins un capteur relié au premier circuit électrique et adapté pour délivrer un signal représentatif de la position de verrouillage de l'organe de verrouillage,
- le premier dispositif de fixation comprend au moins un capteur relié au premier circuit électrique et adapté pour délivrer un signal représentatif de la présence de la tête d'ancrage dans l'espace de réception,
- le premier dispositif de fixation comprend un organe de déverrouillage électrique adapté pour écarter l'organe de verrouillage de sa position de verrouillage,
- le deuxième dispositif de fixation comporte un deuxième circuit électrique, les premier et deuxième dispositifs de fixation comportant des interfaces de communication adaptées pour faire communiquer lesdits circuits électriques lorsque le cycle est verrouillé sur le poste de verrouillage,
- les interfaces de communication comprennent des contacts électriques disposés en regard les uns des autres,
- au moins certains desdits contacts électriques s'étendent verticalement de façon à permettre la communication entre les premier et deuxième circuits électriques sur une plage de positions verticales relatives entre le cycle et le poste de verrouillage,
- les interfaces de communication comprennent des interfaces sans contact,
- le premier dispositif de fixation est lié au cycle et le deuxième dispositif de fixation est lié au poste de verrouillage,
- le cycle comprend un antivol comprenant un câble dont une extrémité est fixée au cycle et l'extrémité opposée comprend une broche pourvue d'une tête secondaire d'ancrage adaptée pour pouvoir être verrouillée dans l'espace de réception du premier dispositif de fixation.

Par ailleurs, l'invention a pour objet un cycle pour un système de stockage automatique de cycles tel que décrit ci-dessus.

En outre, l'invention propose un poste de verrouillage pour un système de stockage automatique de cycles tel que décrit ci-dessus.

D'autres objets et avantages de l'invention apparaîtront à la lecture de la description qui suit, faite en référence aux dessins annexés dans lesquels:
- la figure 1 est une vue schématique en perspective représentant un système de stockage automatique de cycles selon un mode de réalisation de l'invention,

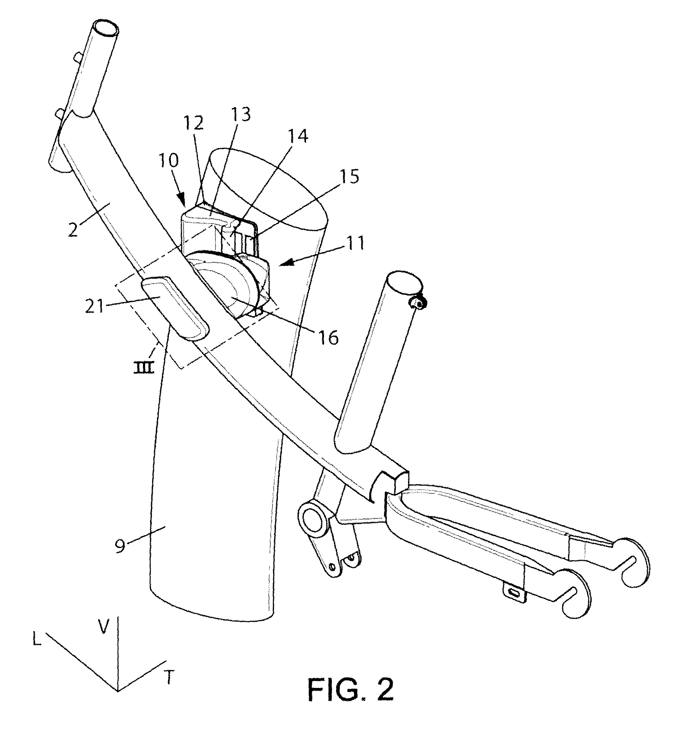

- la figure 2 est une vue de détail du système de stockage de la figure 1 représentant le verrouillage du cadre d'un cycle sur un poste de verrouillage,
- la figure 3 est une vue en coupe selon le plan III de la figure 2,
- la figure 4 est une vue en perspective d'une partie d'un premier dispositif de fixation verrouillé sur un deuxième dispositif de fixation du système de stockage de la figure 1,
- la figure 5 est une vue agrandie du premier dispositif de fixation de la figure 4,
- la figure 6 est une vue de dessus du premier dispositif de fixation et du deuxième dispositif de fixation de la figure 4,
- la figure 7 est une vue en perspective du deuxième dispositif de fixation et d'une partie du premier dispositif de fixation du système de stockage de la figure 1, en position déverrouillée,
- la figure 8 est une vue agrandie du premier dispositif de fixation de la figure 7,
- la figure 9 est une vue de dessus du premier dispositif de fixation et du deuxième dispositif de fixation de la figure 7,
- la figure 10 est une vue en perspective d'un organe de verrouillage du premier dispositif de fixation du système de stockage de la figure 1, et
- la figure 11 est une vue de dessus de l'organe de verrouillage de la figure 10.

Sur les figures, les mêmes références désignent des éléments identiques ou similaires.

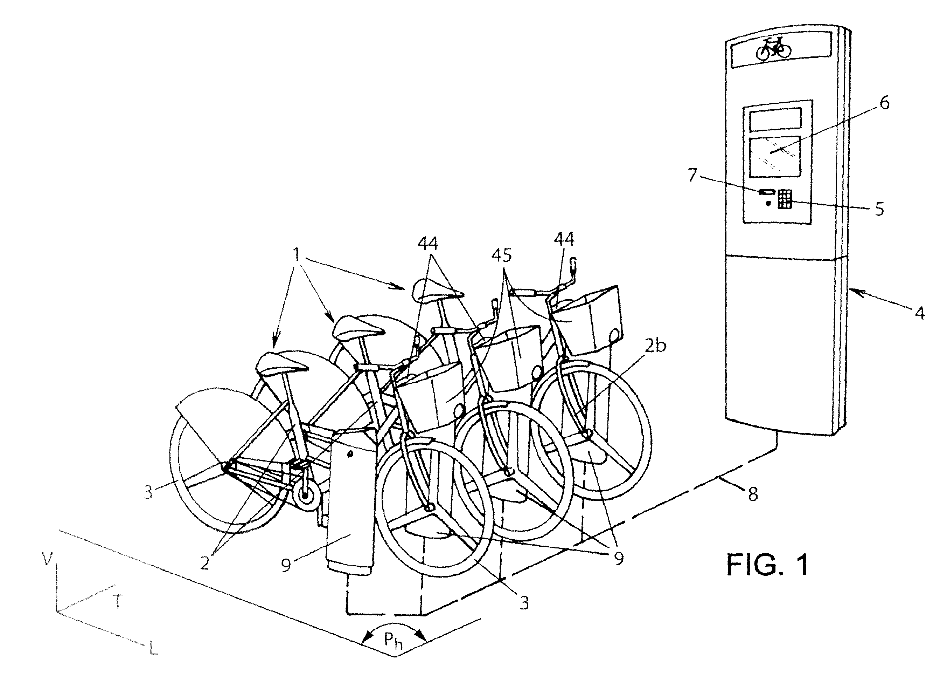

La figure 1 représente un système de stockage automatique de cycles permettant notamment de stocker une pluralité de cycles 1 sur une voie publique de façon à les mettre à disposition d'utilisateurs.

Dans l'exemple représenté, les cycles 1 comprennent chacun notamment un cadre 2 qui repose sur le sol par l'intermédiaire de deux roues 3 sensiblement coplanaires montées pivotantes sur le cadre.

Sur la figure 1, le système de stockage automatique comporte une aire de stockage de cycles comprenant une borne interactive 4 dotée d'une interface utilisateur comprenant par exemple un clavier 5, un écran 6 et un lecteur 7 de cartes portatives électroniques. On peut prévoir que le système comprenne plusieurs aires de stockage comprenant chacune une borne interactive 4.

La borne interactive 4 est reliée, par liaison filaire enterrée 8 ou tout autre mode de liaison appropriée notamment à distance, à une pluralité de postes de verrouillage 9 qui peuvent par exemple se présenter sous forme de bornes de verrouillage fixées au sol sur la voie publique.

Dans la suite de la description, la surface du sol sur laquelle le poste de verrouillage 9 est fixé, notamment la surface de l'aire de stockage, définit un plan horizontal Ph. On définit deux directions du plan horizontal Ph, à savoir une direction longitudinale L qui correspond la direction dans laquelle s'étend généralement le cycle 1, et une direction transversale T perpendiculaire à la direction longitudinale L. On définit également une direction verticale V perpendiculaire au plan horizontal. On définit également un plan vertical comprenant la direction longitudinale L et la direction verticale V, et un plan transversal comprenant la direction transversale T et la direction verticale V.

Par ailleurs, les termes « avant » et « arrière » seront compris par rapport au sens usuel de déplacement du cycle 1.

Dans le système de stockage automatique de cycles, chaque cycle 1 est verrouillable sur l'un des postes de verrouillage 9 par l'intermédiaire de premier 11 et deuxième 10 dispositifs de fixation liés l'un au cycle 1 et l'autre au poste de verrouillage 9.

La description qui suit est faite en relation avec un système de stockage dans lequel le premier dispositif de fixation 11 est lié au cycle 1 et le deuxième dispositif de fixation 10 est lié au poste de verrouillage 9.

On peut toutefois prévoir, en variante non représentée, un système de stockage dans lequel le premier dispositif de fixation 11 est lié au poste de verrouillage 9 et le deuxième dispositif de fixation 10 est lié au cycle 1.

Chaque cycle 1 peut alors adopter un état de stockage et un état d'utilisation.

Dans l'état de stockage, le cycle 1 est verrouillé sur le poste de verrouillage 9, les dispositifs de fixation 10, 11 étant fixés l'un à l'autre. Le cycle 1 peut alors être maintenu dans une position verticale, sur ses roues 3, par appui sur le poste de verrouillage 9 ou au moyen d'une béquille montée sur le cadre 2.

Dans l'état d'utilisation, le cycle 1 n'est pas verrouillé sur un poste de verrouillage 9 et peut être emprunté par un utilisateur.

Selon l'invention, on prévoit que le deuxième dispositif de fixation 10 forme un dispositif d'ancrage et le premier dispositif de fixation 11 forme un dispositif de verrouillage.

Sur les figures, le deuxième dispositif de fixation 10 peut comprendre un corps creux 13 qui s'étend sensiblement verticalement et monté sur un support 12 associé à une surface latérale du poste de verrouillage 9.

En particulier, le corps creux 13 peut comprendre des premier 13a et deuxième 13b bords transversaux décalés l'un part rapport à l'autre selon la direction longitudinale L. Le corps 13 peut comprendre une tête d'ancrage 14 allongée, par exemple formant une tige rectiligne généralement cylindrique selon un axe sensiblement vertical, et associée rigidement au premier bord 13a. Le corps 13 présente, entre la tête d'ancrage 14 et le deuxième bord 13b, une zone dont la dimension transversale Dᵣ, mesurée perpendiculairement à la direction longitudinale, est inférieure aux dimensions transversales Dₜ, D_{b} respectivement au voisinage de la tête d'ancrage 14 et du deuxième bord 13b. La zone forme ainsi, derrière la tête d'ancrage 14, un renfoncement latéral d'ancrage 13c qui s'étend verticalement entre la tête d'ancrage 14 et le deuxième bord 13b.

Le support 12 du deuxième dispositif de fixation 10 peut comporter notamment un circuit électrique et au moins une interface de communication 15. Sur les figures, les interfaces de communication 15 du deuxième dispositif de fixation 10 comprennent, par exemple, deux contacts électriques 15 parallèles qui s'étendent verticalement.

Le poste de verrouillage présente ainsi une structure simple qui en facilite l'installation sur l'aire de stockage.

Le premier dispositif de fixation 11 comprend un boîtier fermé 16 fixé à une zone de fixation du cadre 2.

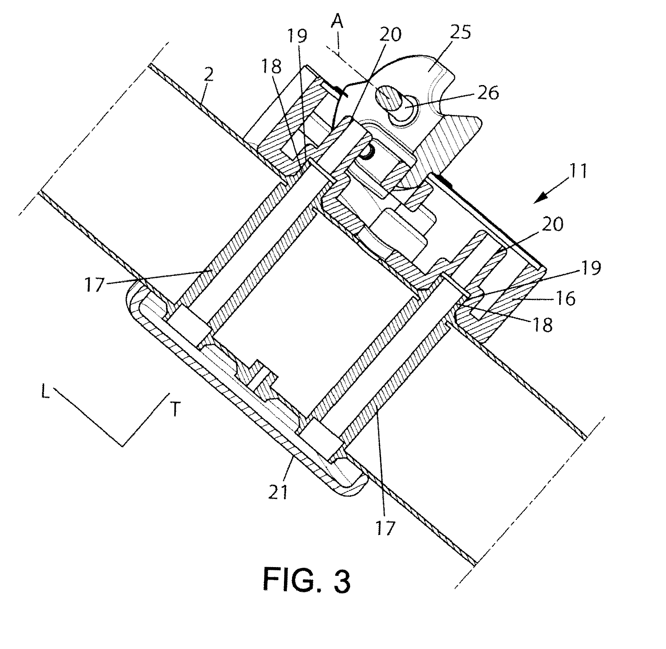

La zone de fixation du cadre 2 peut comprendre un ou plusieurs, deux dans le mode de réalisation représenté sur la figure 3, cylindres creux de fixation 17 traversant transversalement le cadre 2 et dont une portion extrême 18 fait saillie d'un côté du cadre 2. Les cylindres de fixation 17 peuvent être fixés sur le cadre 2 par soudure ou autre.

Le boîtier 16 peut présenter deux évidements 19 recevant chacun l'une des portions extrêmes 18 des cylindres de fixation 17. Par ailleurs, un trou taraudé 20 peut s'étendre depuis le fond de chaque évidement 19 de telle sorte qu'un organe de fixation, non représenté, par exemple une vis ou un boulon, peut être disposé dans chaque cylindre de fixation 17 et coopérer par vissage avec le trou taraudé 20 correspondant, pour fixer le boîtier 16 du dispositif de verrouillage 11 au cadre 2 du cycle 1. A l'opposé du boîtier, un cache 21 peut venir recouvrir les têtes des organes de fixation.

Le premier dispositif de fixation 11 comprend également une fourche solidarisée au boîtier 16 par des éléments de fixation, comme par exemple des vis, des boulons, des pattes d'encliquetage ou autre, s'étendant entre la fourche et le boîtier 16.

La fourche présente une base transversale 22 et deux branches latérales 23 écartées l'une de l'autre, une branche intérieure 23a à proximité du cadre 2 et une branche extérieure 23b à distance du cadre 2. Les branches latérales 23a, 23b s'étendent vers l'avant depuis la base 22 sensiblement dans un même plan horizontal, selon la direction longitudinale L, de façon à former un espace de réception 24 ouvert verticalement adapté pour recevoir la tête d'ancrage 14.

Dans le mode de réalisation représenté, le boîtier 16 délimite un logement dans lequel un organe de verrouillage est monté.

Par exemple, l'organe de verrouillage peut comprendre un plateau mince 25 monté pivotant sur la fourche autour d'un axe de rotation A sensiblement vertical. Pour ce faire, l'organe de verrouillage peut également comprendre un arbre central 26 monté dans un alésage central 27 du plateau 25 de sorte à pouvoir s'étendre coaxialement à l'axe de rotation A de part et d'autre du plateau 25.

On peut toutefois prévoir, dans des modes de réalisation non représentés, que le plateau 25 puisse être monté pivotant autour d'un axe de rotation A qui présente une orientation autre que verticale. En variante, un organe de verrouillage monté en translation sur la fourche du premier dispositif de verrouillage 11 peut être prévu.

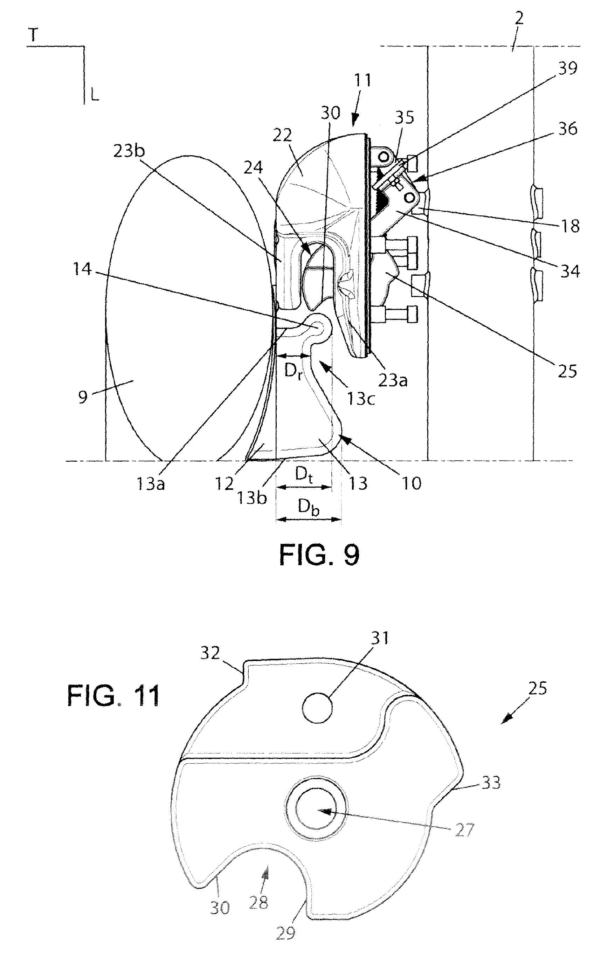

Sur les figures 10 et 11, le plateau 25 est pourvu d'un évidement 28 en forme général de U ménagé à sa périphérie. L'évidement comprend un bord d'arrêt 29 et un bord de butée 30 en regard l'un de l'autre. Le bord de butée 30 peut présenter un rayon de courbure croissant alors que le rayon de courbure du bord d'arrêt 29 est sensiblement constant.

A l'opposé de l'évidement 28, le plateau 25 présente un trou traversant 31 et deux surfaces 32, 33 de limitation du mouvement du plateau qui s'étendent radialement par rapport à l'axe de rotation A, de part et d'autre du trou traversant 31. L'une 32 des surfaces de limitation disposée entre le trou traversant 31 et le bord de butée 30 est sensiblement parallèle au bord d'arrêt 29. L'autre surface de limitation 33 disposée entre le trou traversant et le bord d'arrêt 29 est sensiblement parallèle au bord butée 30.

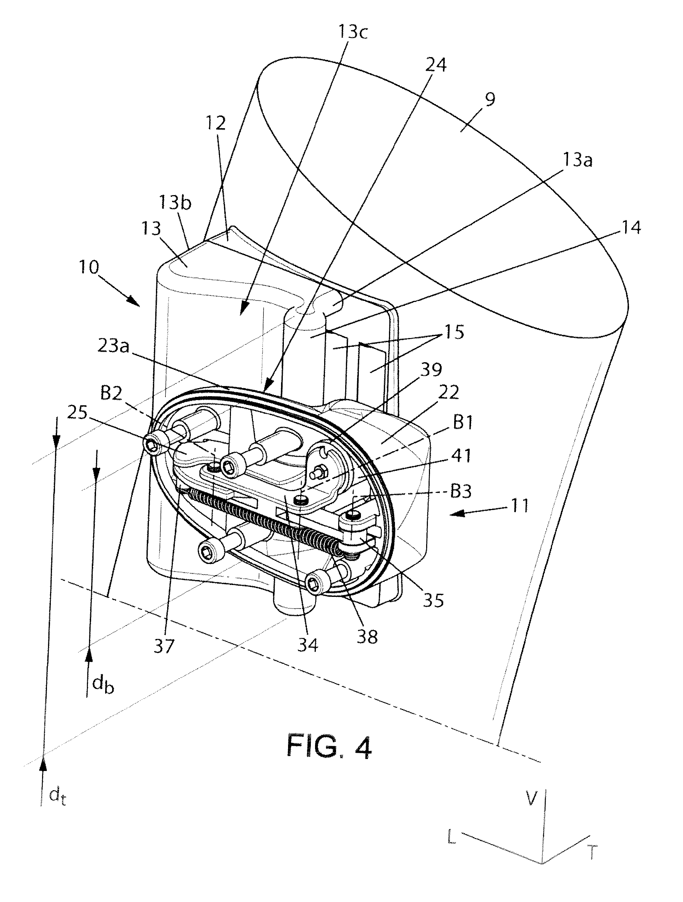

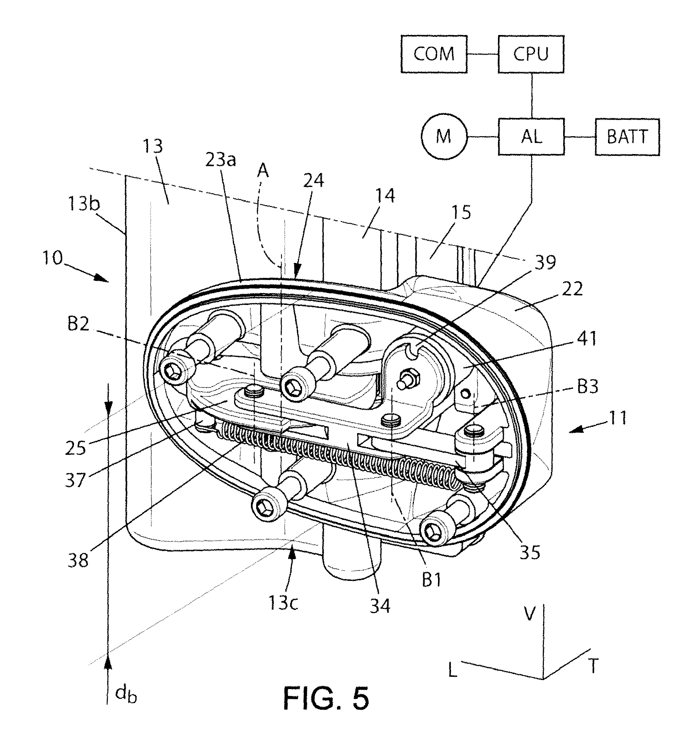

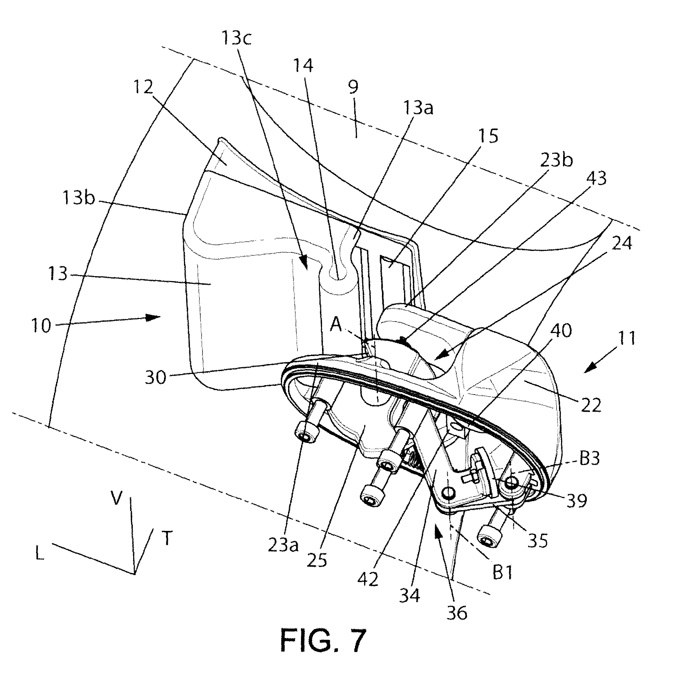

Le plateau mince 25 est déplaçable par rapport à la fourche entre une position escamotée, représentée notamment sur les figures 7 à 9, et une position de verrouillage, représentée notamment sur les figures 4 à 6.

En position escamotée du plateau 25, le bord d'arrêt 29 se trouve en dehors de l'espace de réception 24, par exemple, disposé sensiblement dans la branche intérieure 23a de la fourche. Dans cette position, le plateau 25 n'interfère pas avec la tête d'ancrage 14.

Les dispositions du bord d'arrêt 29, du bord de butée 30 et des surfaces de limitation de mouvement 32, 33 sont prévues notamment pour que le bord de butée 30 puisse, en position escamotée du plateau 25, s'étendre au moins partiellement dans l'espace 24 et entrer en contact avec la tête d'ancrage 14 de sorte à faire passer le plateau 25 de sa position escamotée à sa position de verrouillage.

En position de verrouillage, le bord d'arrêt 29 s'étend au moins partiellement dans l'espace de réception 24. Le bord d'arrêt 29 est, par ailleurs, disposé dans le renfoncement d'ancrage 13c, en regard de la tête d'ancrage 14, à l'opposé de la base transversale 22, de sorte à pouvoir s'engager sur la tête d'ancrage 14 et la retenir entre les branches latérales 23a, 23b. La surface de limitation de mouvement 33 parallèle au bord de butée 30 vient en contact avec une surface de la fourche de sorte que le bord d'arrêt puisse s'étendre au moins partiellement dans l'espace de réception 24.

Pour faciliter le positionnement relatifs des dispositifs de fixation 10, 11, la dimension verticale dₜ de la tête d'ancrage 14 est supérieure à la dimension verticale d_{b} des branches 23a, 23b de sorte à ménager un jeu vertical entre les dispositifs de fixation 10, 11. En outre, la dimension verticale d_{b} des branches 23a, 23b peut être supérieure à la dimension verticale dₛ du bord d'arrêt 29.

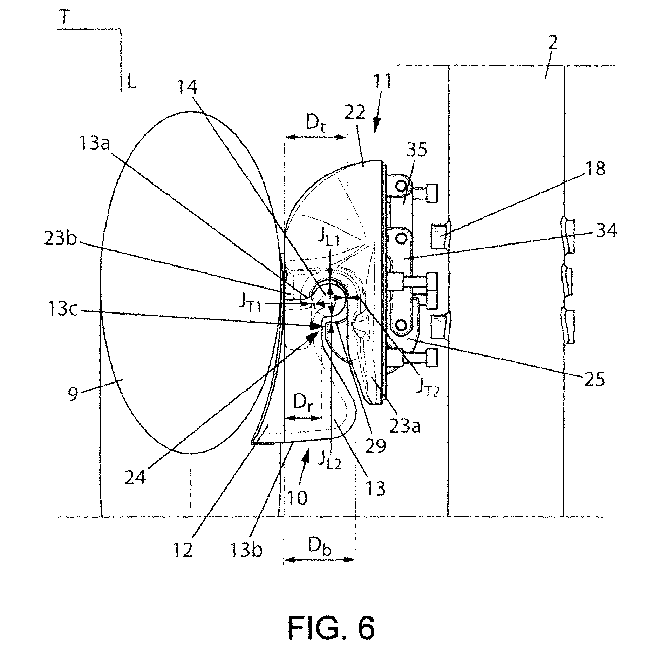

Par ailleurs, comme représenté sur la figure 6, un jeu transversal J_{T} peut être ménagé entre les dispositifs de fixation 10, 11 selon la direction transversale T. En particulier, l'écartement entre les branches intérieure 23a et extérieure 23b est tel que l'espace de réception 24 peut recevoir la tête d'ancrage 14 avec un jeu transversal formé, par exemple, par la somme des jeux transversaux J_{T1} et J_{T2} respectivement entre la tête d'ancrage 14 et la branche extérieure 23b et entre la tête d'ancrage 14 et la branche intérieure 23a.

Par ailleurs, un jeu longitudinal J_{L} peut être ménagé entre les dispositifs de fixation 10 ,11 selon la direction longitudinale L. En particulier, lorsque le plateau 25 est en position de verrouillage, la distance entre le bord d'arrêt 29 et la base 22 est telle que l'espace 24 peut retenir la tête d'ancrage 14 avec un jeu longitudinal J_{L} formé par la somme des jeux longitudinaux J_{L1}, et J_{L2} respectivement entre la tête d'ancrage 14 et la base 22 et entre la tête d'ancrage 14 et le bord d'arrêt 29.

De telles dispositions prises séparément ou en combinaison permettent d'augmenter les tolérances de positionnement et d'orientation relatifs entre les premier 11 et deuxième 10 dispositifs de fixation.

Par exemple, on peut prévoir un engagement entre la tête d'ancrage 14 et l'espace de réception 24 avec un jeu vertical d'au moins ± 2 cm. En particulier, on peut prévoir d'obtenir le verrouillage du premier dispositif de fixation 11 sur le deuxième dispositif de fixation 10 avec un décalage vertical de l'ordre de ± 3 cm par rapport à une position déterminée et un décalage angulaire autour de chacune des directions supérieur à de l'ordre de ± 10° par rapport à une orientation déterminée.

Le premier dispositif de fixation 11 peut comprendre un système de contrôle du déplacement du plateau 25 entre sa position escamotée et sa position de verrouillage. Le système de contrôle est déplaçable entre des première et deuxième positions.

Pour ce faire, le système de contrôle peut comprendre une première 34 et une deuxième 35 bielles articulées l'une à l'autre en rotation autour d'un axe central d'articulation B1 parallèles à l'axe de rotation A. L'extrémité libre de la première bielle 34 peut être articulée autour d'un premier axe latéral d'articulation B2 au plateau pivotant par exemple au moyen d'un arbre monté dans le trou traversant 31. Et l'extrémité libre de la deuxième bielle 35 peut être articulée à la base 22 de la fourche autour d'un deuxième axe latéral d'articulation B3.

L'écartement entre les axes d'articulation B et la longueur des bielles 34, 35 sont prévues pour que, dans la première position, les bielles 34, 35 soient alignées dans un même plan vertical sensiblement selon la direction longitudinale L et empêchent la rotation du plateau 25, le plateau 25 étant en position de verrouillage (figures 4 à 6). Et lorsque les bielles 34, 35 sont désalignés, les bielles forment entre elles un coude 36 au niveau de l'axe central d'articulation B1 et sont déplaçables l'une part rapport à l'autre, ce qui autorise la rotation du plateau 25 qui peut être écarté de sa position de verrouillage (figures 7 à 9).

Le système de contrôle peut alors comprendre un organe élastique, tel qu'un ressort 38, monté entre un téton vertical 37 solidaire du plateau 25 et la fourche pour solliciter élastiquement les bielles vers la deuxième position lorsqu'elles sont désalignées et maintenir le plateau 25 en position escamotée.

Un tel système de contrôle forme un système dans lequel les première et deuxième positions sont stables.

En variante non représentée, une autre disposition des bielles et des axes d'articulation B que celle décrite précédemment peut être prévue.

Le système de contrôle peut également comprendre un organe de maintien, comme par exemple un aimant permanent 39, associé à l'une des bielles 34, 35 de façon à être lié à une surface de maintien 40, par exemple magnétique, de la fourche lorsque les bielles sont alignées et à être écarté de la surface de maintien 40 de la fourche lorsque les bielles sont désalignées.

En particulier, l'aimant permanent 39 peut être monté sur une extension transversale de la première bielle 34 de sorte à venir en contact avec un électroaimant 41 formant plot transversal qui comprend la surface magnétique de maintien 40.

On peut alors prévoir que le système de contrôle comprenne un organe d'éjection 39a, par exemple un poussoir sollicité élastiquement vers une position en saillie, pour repousser l'aimant permanent 39 de façon à écarter l'aimant 39 de la surface de maintien 40.

Le dispositif de verrouillage 11 peut comporter un circuit électrique comprenant par exemple une unité centrale CPU et un circuit de puissance AL alimentés par une batterie BATT.

On peut ainsi prévoir que lorsque l'électroaimant 41 est parcouru par un courant électrique, il génère un champ magnétique qui rompt la liaison, en l'occurrence magnétique, entre l'aimant permanent 39 et la surface de maintien 40. L'action combinée du champ magnétique et du poussoir 39a repousse l'aimant permanent 39 et l'écarte de la surface de maintien 40. Ce faisant, les bielles 34 et 35 se désalignent et forment le coude 36 au niveau de l'axe central d'articulation B1 pour écarter le plateau 25 de sa position de verrouillage et en autoriser la rotation. L'électroaimant forme ainsi un organe de déverrouillage électrique.

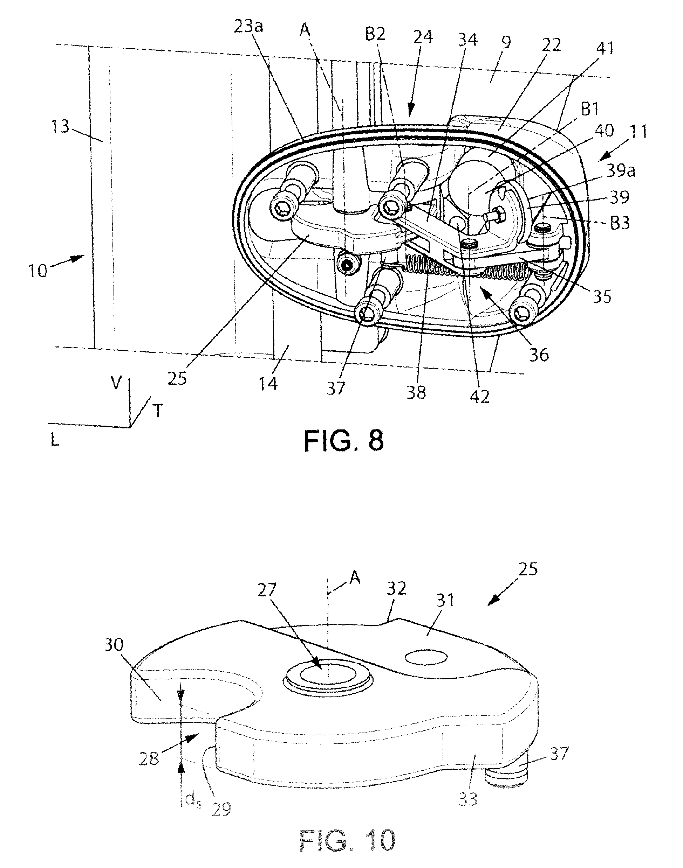

Un capteur 42 relié au circuit électrique du premier dispositif de fixation 11 peut être adapté pour délivrer un signal représentatif de la position de verrouillage du plateau 25. Sur les figures 7 et 8, le capteur 42, par exemple inductif, délivre un tel signal lorsqu'il détecte la présence de la première bielle 34 dans la position alignée avec la deuxième bielle 35. Plusieurs capteurs peuvent toutefois être prévus pour réaliser une détection de ce type.

Par ailleurs, un deuxième capteur 43 également relié au circuit électrique du premier dispositif de fixation 11 peut être adapté pour délivrer un signal représentatif de la présence de la tête d'ancrage 14 dans l'espace 24. Sur la figure 7, le capteur 43, par exemple inductif, est disposé sur la face en regard de l'espace 24 de la branche extérieure 23b pour détecter la présence de la tête d'ancrage 14. Plusieurs capteurs peuvent toutefois être prévus pour réaliser une détection de ce type.

Pour faire communiquer le circuit électrique du premier dispositif de fixation 11 avec le circuit électrique du deuxième dispositif de fixation 10 et la borne interactive 4 lorsque le cycle est dans un état de stockage, le premier dispositif de fixation 11 peut comporter des interfaces de communication COM adaptées pour communiquer avec les interfaces de communication 15 du deuxième dispositif de fixation 10.

Les interfaces de communication COM du premier dispositif de fixation 11 peuvent comprendre des contacts électriques disposés en regard les contacts électriques 15 du deuxième dispositif de fixation 10.

Les contacts électriques dont au moins certains s'étendent verticalement sont alors adaptés pour venir en contact les uns avec les autres pour établir une communication entre les circuits électriques dans une plage de positions verticales relatives entre le cycle 1 et le poste de verrouillage 9. Les contacts électriques peuvent être utilisés pour recharger la batterie BATT alimentant l'unité centrale CPU du premier dispositif de fixation 11 et/ou, le cas échéant, des batteries d'un moteur électrique M prévu sur le cycle 1 pour assister la propulsion du cycle 1 en état d'utilisation.

En variante éventuellement complémentaire, les interfaces de communication du deuxième dispositif de fixation 10 et du premier dispositif de fixation 11 peuvent comprendre des interfaces sans contact. On peut ainsi améliorer la fiabilité de la communication entre les circuits électriques des premier 11 et deuxième 10 dispositifs de fixation en augmentant la transmission de données, et notamment en doublant cette transmission par voie radio au moyen des interfaces sans contact, d'une part, et par voie filaire au moyen des contacts électriques, d'autre part.

On décrit maintenant le fonctionnement du système de stockage automatique de cycles décrit ci-dessus.

Lorsqu'un utilisateur veut emprunter un cycle 1 en état de stockage sur l'un des postes de verrouillage 9, il s'identifie auprès de la borne interactive 4, par exemple en insérant dans le lecteur 7 de la borne 4 une carte portative électronique.

La borne 4 commande alors le circuit électrique du premier dispositif de fixation 11 de faire parcourir un courant électrique dans l'électroaimant 41 pour écarter l'aimant permanent 39 de la surface de maintien 40.

Dans le mode de réalisation représenté, une telle commande est réalisée par l'intermédiaire des interfaces de communication, le premier dispositif de fixation 11 étant sur le cycle 1. Dans un mode de réalisation dans lequel le premier dispositif de fixation 11 est sur le poste de verrouillage 9, cette commande peut se faire directement.

Les bielles 34, 35 formant le coude 36 autorisent la rotation du plateau 35 et l'utilisateur peut déplacer le cycle sensiblement longitudinalement dans un sens de désengagement de la tête d'ancrage 14 hors de l'espace de réception 24, à savoir vers l'arrière. Ce faisant, la tête d'ancrage 14 vient en contact avec le bord d'arrêt 29, fait pivoter le plateau 25 jusqu'à la position escamotée dans laquelle il est maintenu par le ressort 38. Le cycle est alors libéré du poste de verrouillage 9.

On peut prévoir que le cycle 1 comprenne un antivol 44 visible à la figure 1 qui peut comprendre par exemple un câble dont une extrémité est fixée au cycle 1, notamment au niveau de l'attache d'un panier 45 situé à l'avant du cycle 1. L'extrémité opposée du câble peut comprendre une broche pourvue d'une tête secondaire d'ancrage, non représentée, de géométrie analogue à la tête d'ancrage 14 du deuxième dispositif de fixation 10 afin de pouvoir être reçue dans l'espace de réception 24 du premier dispositif de fixation 11. L'antivol 44 permet à l'utilisateur d'immobiliser temporairement le cycle 1 en état d'utilisation.

La libération de la tête secondaire d'ancrage se fait de manière analogue à celle de la tête d'ancrage 14 du deuxième dispositif de fixation 10 par l'intermédiaire d'un dispositif de commande, mécanique ou électrique, intégré au premier dispositif de fixation 11 du cycle 1.

Lors de la mise en place du cycle 1 sur un poste de verrouillage 9, l'utilisateur déplace le cycle 1 en état d'utilisation sensiblement longitudinalement dans un sens d'engagement de la tête d'ancrage 14 dans l'espace de réception 24, à savoir vers l'avant. Sollicité par le ressort 38, le plateau 25 est en position escamotée et la tête d'ancrage peut venir en contact avec le bord de butée 30 du plateau pivotant 25. Celui-ci pivote autour de l'axe de rotation A vers la position de verrouillage. Une fois les bielles 34, 35 alignées et l'aimant permanent 39 lié à la surface de maintien 40, le bord d'arrêt 29 est maintenu en regard de la base 22 et ferme l'espace de réception 24 de sorte à retenir la tête d'ancrage 14 dans l'espace de réception 24.

Le capteur 43 détecte la présence de la tête d'ancrage 14 dans l'espace de réception 24 et le capteur 42 détecte la présence de la première bielle 34 dans sa position alignée. Les capteurs peuvent alors émettre des signaux d'information concernant le positionnement du cycle 1 sur un poste de verrouillage 9 et le verrouillage du cycle sur le poste de verrouillage 9, les signaux d'information étant transmis au poste de verrouillage 9 et à la borne interactive 4 par les interfaces de communication.

La mise en place de la tête secondaire d'ancrage peut se faire de manière analogue à celle de la tête d'ancrage 14 du dispositif d'ancrage 10.

## Revendications

1. Système de stockage automatique de cycles comprenant une pluralité de cycles (1) et une pluralité de postes de verrouillage (9) fixes, chaque cycle (1) étant verrouillable sur un poste de verrouillage (9) selon une direction longitudinale (L) par l'intermédiaire de premier (11) et deuxième (10) dispositifs de fixation liés l'un au cycle (1) et l'autre au poste de verrouillage (9),
**caractérisé en ce que** le deuxième dispositif de fixation (10) comprend une tête d'ancrage (14) sensiblement verticale,
**en ce que** le premier dispositif de fixation (11) comprend :
. une fourche qui présente une base transversale (22) et deux branches latérales (23a, 23b), écartées l'une de l'autre, s'étendant depuis la base (22) sensiblement dans un même plan horizontal, selon la direction longitudinale (L), de façon à former un espace de réception (24) ouvert verticalement adapté pour recevoir la tête d'ancrage (14),
. un organe de verrouillage (25) déplaçable par rapport à la fourche entre une position escamotée dans laquelle ledit organe de verrouillage (25) n'interfère pas avec la tête d'ancrage (14) et une position de verrouillage dans laquelle ledit organe de verrouillage (25) s'étend au moins partiellement dans l'espace de réception (24) de façon à pouvoir retenir la tête d'ancrage (14) entre les branches (23a, 23b) et la base (22),
et **en ce qu'**un jeu vertical est ménagé entre les premier (11) et deuxième (10) dispositifs de fixation.

2. Système de stockage automatique de cycles selon la revendication 1, dans lequel un jeu transversal (J_{T}) est ménagé entre les premier (11) et deuxième (10) dispositifs de fixation selon une direction (T) horizontale perpendiculaire à la direction longitudinale (L).

3. Système de stockage automatique de cycles selon la revendication 1 ou 2, dans lequel un jeu longitudinal (J_{L}) est ménagé entre les premier (11) et deuxième (10) dispositifs de fixation selon ladite direction longitudinale (L).

4. Système de stockage automatique de cycles selon l'une quelconque des revendications 1 à 3, dans lequel les premier (11) et deuxième (10) dispositifs de fixation sont adaptés pour permettre un engagement entre la tête d'ancrage (14) et l'espace de réception (24) avec un jeu vertical d'au moins ± 2 cm.

5. Système de stockage automatique de cycles selon l'une quelconque des revendications 1 à 4, dans lequel la tête d'ancrage (14) forme une tige rectiligne généralement cylindrique.

6. Système de stockage automatique de cycles selon la revendication 5, dans lequel le deuxième dispositif de fixation (10) comprend un corps creux (13) qui s'étend sensiblement verticalement, ledit corps comprenant des premier (13a) et deuxième (13b) bords transversaux décalés l'un part rapport à l'autre selon la direction longitudinale (L), la tête d'ancrage (14) étant associée rigidement au premier bord (13a), le corps (13) présentant, entre la tête d'ancrage (14) et le deuxième bord (13b), une zone dont la dimension transversale (_{Dr}), mesurée perpendiculairement à la direction longitudinale, est inférieure à celles (Dₜ, D_{b} au voisinage de la tête d'ancrage (14) et du deuxième bord (13b) de façon à former un renfoncement latéral d'ancrage (13c) s'étendant vertiCalement entre la tête d'ancrage (14) et le deuxième bord (13b).

7. Système de stockage automatique de cycles selon l'une quelconque des revendications 1 à 6, dans lequel l'organe de verrouillage (25) est monté pivotant sur la fourche autour d'un axe de rotation (A) sensiblement vertical.

8. Système de stockage automatique de cycles selon la revendication 7, dans lequel l'organe de verrouillage comprend un plateau mince (25) et un arbre central (26) s'étendant coaxialement à l'axe de rotation (A) de part et d'autre du plateau (25), lequel plateau (25) est pourvu d'un évidement (28) ménagé à sa périphérie et adapté pour s'engager sur la tête d'ancrage (14).

9. Système de stockage automatique de cycles selon la revendication 8, dans lequel l'évidement (28) comprend un bord d'arrêt (29) et un bord de butée (30), le bord d'arrêt (29) se trouvant en dehors de l'espace de réception (24) en position escamotée du plateau (25) et s'étendant dans l'espace de réception (24), en regard de la tête d'ancrage (14), à l'opposé de la base (22) en position de verrouillage du plateau (25), le bord de butée (30) étant adapté pour entrer en contact avec la tête d'ancrage (14) de façon à faire passer le plateau (25) de la position escamotée à la position de verrouillage.

10. Système de stockage automatique de cycles selon l'une quelconque des revendications 1 à 9, dans lequel le premier dispositif de fixation (11) comprend un système de contrôle du déplacement de l'organe de verrouillage (25), ledit système de contrôle étant déplaçable entre une première position dans laquelle il maintient l'organe de verrouillage (25) dans la position de verrouillage, et une deuxième position dans laquelle il maintient l'organe de verrouillage (25) dans la position escamotée.

11. Système de stockage automatique de cycles selon la revendication 10, dans lequel le système de contrôle comprend des première (34) et deuxième (35) bielles articulées l'une à l'autre en rotation autour d'un axe central d'articulation (B1), les extrémités libres de la première (34) et de la deuxième (35) bielles étant articulées respectivement à l'organe de verrouillage (25) et à la fourche autour d'axes latéraux d'articulation (B2, B3) de telle sorte que, dans la première position, les bielles (34, 35) sont alignées et, dans la deuxième position, les bielles (34, 35) forment entre elles un coude (36) au niveau de l'axe central d'articulation (B1).

12. Système de stockage automatique de cycles selon la revendication 11, dans lequel les axes d'articulation (B1, B2, B3) sont verticaux.

13. Système de stockage automatique de cycles selon la revendication 11 ou 12, dans lequel le système de contrôle comprend un organe élastique (38) adapté pour maintenir les bielles (34, 35) alignées dans la première position et pour solliciter élastiquement les bielles (34, 35) vers la deuxième position lorsqu'elles sont désalignées.

14. Système de stockage automatique de cycles selon l'une quelconque des revendications 11 à 13, dans lequel le système de contrôle comprend en outre un organe de maintien (39) associé à l'une (34) des bielles, ledit organe de maintien (39) étant lié à une surface de maintien (40) de la fourche lorsque les bielles (34, 35) sont alignées et étant écarté de la surface de maintien (40) lorsque les bielles (34, 35) sont désalignées.

15. Système de stockage automatique de cycles selon la revendication 14, dans lequel l'organe de maintien (39) est un aimant permanent, la surface de maintien (40) de la fourche étant magnétique.

16. Système de stockage automatique de cycles selon la revendication 14 ou 15, dans lequel le système de contrôle comprend en outre un organe d'éjection (39a) de l'organe de maintien (39) adapté pour écarter l'organe de maintien (39) de la surface de maintien (40).

17. Système de stockage automatique de cycles selon l'une quelconque des revendications 1 à 16, dans lequel le premier dispositif de fixation (11) comprend en outre un boîtier (16) fermé délimitant un logement dans lequel l'organe de verrouillage (25) est monté.

18. Système de stockage automatique de cycles selon l'une quelconque des revendications 1 à 17, dans lequel le premier dispositif de fixation (11) comporte un premier circuit électrique commandant l'organe de verrouillage (25).

19. Système de stockage automatique de cycles selon la revendication 18, dans lequel le premier dispositif de fixation (11) comprend au moins un capteur (42) relié au premier circuit électrique et adapté pour délivrer un signal représentatif de la position de verrouillage de l'organe de verrouillage (25).

20. Système de stockage automatique de cycles selon la revendication 18 ou 19, dans lequel le premier dispositif de fixation (25) comprend au moins un capteur (43) relié au premier circuit électrique et adapté pour délivrer un signal représentatif de la présence de la tête d'ancrage (14) dans l'espace de réception (24).

21. Système de stockage automatique de cycles selon l'une quelconque des revendications 18 à 20, dans lequel le premier dispositif de fixation (11) comprend un organe de déverrouillage électrique (41) adapté pour écarter l'organe de verrouillage (25) de sa position de verrouillage.

22. Système de stockage automatique de cycles selon l'une quelconque des revendications 18 à 21, dans lequel le deuxième dispositif de fixation (10) comporte un deuxième circuit électrique, les premier et deuxième dispositifs de fixation comportant des interfaces de communication (15, COM) adaptées pour faire communiquer lesdits circuits électriques lorsque le cycle (1) est verrouillé sur le poste de verrouillage (9).

23. Système de stockage automatique de cycles selon la revendication 22, dans lequel les interfaces de communication (15, COM) comprennent des contacts électriques (15) disposés en regard les uns des autres.

24. Système de stockage automatique de cycles selon la revendication 23, dans lequel au moins certains desdits contacts électriques (15) s'étendent verticalement de façon à permettre la communication entre les premier et deuxième circuits électriques sur une plage de positions verticales relatives entre le cycle (1) et le poste de verrouillage (9).

25. Système de stockage automatique de cycles selon l'une quelconque des revendications 22 à 24, dans lequel les interfaces de communication (15, COM) comprennent des interfaces sans contact.

26. Système de stockage automatique de cycles selon l'une quelconque des revendications 1 à 25, dans lequel le premier dispositif de fixation (11) est lié au cycle (1) et le deuxième dispositif de fixation (10) est lié au poste de verrouillage (9).

27. Système de stockage automatique de cycles selon la revendication 26, dans lequel le cycle (1) comprend un antivol (44) comprenant un câble dont une extrémité est fixée au cycle (1) et l'extrémité opposée comprend une broche pourvue d'une tête secondaire d'ancrage adaptée pour pouvoir être verrouillée dans l'espace de réception (24) du premier dispositif de fixation (11).

28. Cycle (1) pour un système de stockage automatique de cycles selon l'une quelconque des revendications 1 à 27.

29. Poste de verrouillage (9) pour un système de stockage automatique de cycles selon l'une quelconque des revendications 1 à 27.
